# EUROPÄISCHE PATENTANMELDUNG

(11) **EP 4 507 077 A1**
(43) Veröffentlichungstag der Anmeldung: **12.02.2025**
(21) Anmeldenummer: 24151256.5
(22) Anmeldetag: 10.01.2024
(51) Int. Cl.: H01M 50/107, H01M 50/148, H01M 50/152, H01M 50/474, H01M 50/477, H01M 50/184

(54) **ENERGIESPEICHERELEMENT UND HERSTELLUNGSVERFAHREN**

(30) Priorität: 08.08.2023 EP 23190399
(71) Anmelder: VARTA Microbattery GmbH, 73479 Ellwangen Jagst (DE)
(72) Erfinder: Drews, Verena, Giengen 89537 (DE); Elmer, Martin, 73479 Ellwangen (DE); Fürst, Martin, 73492 Rainau-Schwabsberg (DE); Geiger, Michael, 73479 Ellwangen (DE); Kieninger, Dominik, 73492 Rainau (DE)
(74) Vertreter: Ostertag & Partner Patentanwälte mbB

(57) **Zusammenfassung**

Ein Energiespeicherelement umfasst einen Elektroden-Separator-Verbund (104) mit der Sequenz Anode (105) / Separator (156) / Kathode (108), der in Form eines zylindrischen Wickels mit einer ersten endständigen Stirnseite (104a) und einer zweiten endständigen Stirnseite (104b) und einem dazwischen liegenden Wickelmantel (104c) vorliegt. Die Anode (105) und die Kathode (108) sind innerhalb des Elektroden-Separator-Verbunds (104) derart angeordnet, dass ein nicht mit negativem Elektrodenmaterial beschichteter erster Längsrand (106a) des Anodenstromkollektors (106) aus der ersten endständigen Stirnseite (104a) und ein nicht mit positivem Elektrodenmaterial beschichteter erster Längsrand (109a) des Kathodenstromkollektors (108) aus der zweiten endständigen Stirnseite (104b) des Elektroden-Separator-Verbunds (104) austritt. Das Energiespeicherelement umfasst ein Kontaktblechteil (112), das auf dem ersten Längsrand (106a) des Anodenstromkollektors (106) oder dem ersten Längsrand (109a) des Kathodenstromkollektors aufsitzt und die erste oder zweite endständige Stirnseite (104a) oder (104b) abdeckt. Weiterhin umfasst es ein luft- und flüssigkeitsdicht verschlossenes Gehäuse, das einen metallischen Gehäusebecher (101) mit einer endständigen kreisförmigen Öffnung und einen Deckel (102) mit einem kreisförmigen Rand (102a), welcher die kreisförmige Öffnung verschließt, umfasst. Das Gehäuse umfasst eine Dichtung (103) aus einem Kunststoffmaterial, welche den Rand (102a) des Deckels (102) umschließt und zwischen dem Deckel (102) und dem Gehäusebecher (101) angeordnet ist. Die Dichtung (103) umfasst ein Stützelement (103b), das auf dem Kontaktblechteil (112) aufsitzt.

## Beschreibung

### ANWENDUNGSGEBIET UND STAND DER TECHNIK

Die nachstehend beschriebene Erfindung betrifft ein Energiespeicherelement und ein Herstellungsverfahren.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. In der Regel sind Stromkollektoren mit dünnen Schichten aus den jeweiligen Aktivmaterialien beschichtet. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm). Zellen dieser Art umfassen stets einen Elektroden-Separator-Verbund in Form eines Wickels. Moderne Lithium-Ionen-Zellen dieses Formfaktors können eine Energiedichte von bis zu 270 Wh/kg erreichen.

Eine Herausforderung stellt das elektrische Kontaktieren der Elektroden eines Energiespeicherelements dar. Beispielsweise bei Rundzellen mit dem Formfaktor 21 × 70 müssen die Elektroden des Wickels elektrisch angebunden und mit den elektrischen Polen des jeweiligen Gehäuses verbunden werden. Das Gehäuse umfasst dabei in der Regel ein becherförmiges Gehäuseteil mit einem Boden, einer umlaufenden Wand und einer Öffnung. Letztere wird durch einen Deckel verschlossen, nachdem der Wickel in das becherförmige Gehäuseteil eingeschoben wurde.

In den letzten Jahren wurde verstärkt an Lithium-Ionen-Zellen gearbeitet, bei denen die Elektroden mittels eines sogenannten "Tabless-Designs" kontaktiert werden. Hierbei wird auf Tabs gänzlich verzichtet. Stattdessen werden Elektroden-Separator-Verbünde in Form eines Wickels gefertigt, bei denen die Elektroden metallische Stromkollektoren mit unbeschichteten Längsrändern aufweisen, welche an Stirnseiten des Wickels aus dem Wickel herausragen. Dort können metallische Kontaktblechteile auf die Längsränder aufgeschweißt werden, wie das beispielsweise in der WO 2017/215900 A1 beschrieben ist. Idealerweise werden Kontaktblechteile an beiden Stirnseiten des Wickels auf die Längsränder aufgeschweißt. Dadurch ist es möglich, den Stromkollektor und damit auch die dazugehörige Elektrode über seine / ihre gesamte Länge elektrisch zu kontaktieren. Dies senkt den Innenwiderstand innerhalb der Zellen sehr deutlich. Das Auftreten großer Ströme kann in der Folge sehr viel besser abgefangen und auch Wärme kann besser aus dem Wickel abgeführt werden.

Das "Tabless-Design" existiert mittlerweile in vielen Varianten. Es ist beispielsweise möglich, einen Wickel mit stirnseitigen Kontaktblechteilen in das erwähnte becherförmige Gehäuseteil einzuschieben und eines der Kontaktblechteile mit dem Boden des Gehäuseteils zu verschwei-βen, während das andere elektrisch mit dem Deckel verbunden wird. Alternativ kann auch der Boden selbst als Kontaktblechteil dienen. In diesen Fällen wird der Wickel ohne Kontaktblechteil so weit in das becherförmige Gehäuseteil geschoben, dass einer der unbeschichteten Längsränder auf dem Boden aufsitzt. Dieser kann dann an den Gehäuseboden geschweißt werden, beispielsweise mittels eines Lasers durch den Gehäuseboden hindurch.

Das "Tabless-Design" löst in seinen bekannten Varianten allerdings nicht alle bestehenden Probleme. Beispielsweise ist immer noch eine elektrische Verbindung zwischen dem Deckel und dem damit zu kontaktierenden Kontaktblechteil erforderlich. Ein hierzu geeigneter elektrischer Leiter muss ebenso lang sein wie das erwähnte Tab, da er vor dem Schließen des Gehäuses noch mit dem Deckel verschweißt werden muss. Folglich muss der Leiter wie das Tab beim Schließen des Gehäuses gefaltet werden und erzeugt innerhalb des Gehäuses ein Totvolumen.

Bodenseitig besteht ein weiteres Problem. Da der Wickel mindestens in axialer Richtung oft eine begrenzte Beweglichkeit aufweist, da der Leiter zwischen dem Deckel und dem Kontaktblechteil meist federnde Eigenschaften aufweist, kann eine Schweißverbindung zwischen dem Boden und einem Kontaktblechteil oder einem Längsrand mechanischen Belastungen ausgesetzt sein, wenn die Zelle insgesamt einem Schock oder Vibrationen unterliegt. Diese können entsprechend zu einer Erhöhung des Innenwiderstands oder sogar zu einem Ausfall der Zelle führen.

### AUFGABE UND LÖSUNG

Der vorliegenden Erfindung lag die Aufgabe zugrunde, Energiespeicherelemente bereitzustellen, die sich durch eine hohe Energiedichte auszeichnen und insbesondere hinsichtlich des letztgenannten Problems verbessert sind.

Diese Aufgabe wird durch das Energiespeicherelement mit den Merkmalen des Anspruchs 1 gelöst. Ein zur Erfindung gehöriges Verfahren ist Gegenstand des Anspruchs 7. Bevorzugte Ausführungsformen des Energiespeicherelements finden sich in den abhängigen Ansprüchen 2 bis 6. Bevorzugte Ausführungsformen des Verfahrens finden sich im abhängigen Anspruch 8.

Ein erfindungsgemäßes Energiespeicherelement zeichnet sich durch die folgenden Merkmale aus:
a. Das Energiespeicherelement umfasst einen Elektroden-Separator-Verbund mit der Sequenz Anode / Separator / Kathode.
b. Der Elektroden-Separator-Verbund liegt in Form eines zylindrischen Wickels mit einer ersten endständigen Stirnseite und einer zweiten endständigen Stirnseite und einem dazwischen liegenden Wickelmantel vor.
c. Die Anode des Elektroden-Separator-Verbunds umfasst einen Anodenstromkollektor, der einen ersten Längsrand und einen dazu parallelen zweiten Längsrand aufweist und einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist.
d. Die Kathode des Elektroden-Separator-Verbunds umfasst einen Kathodenstromkollektor, der einen ersten Längsrand und einen dazu parallelen zweiten Längsrand aufweist und einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist.
e. Die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt.
f. Das Energiespeicherelement umfasst ein Kontaktblechteil, das auf dem ersten Längsrand des Anodenstromkollektors aufsitzt und die erste endständige Stirnseite abdeckt oder auf dem ersten Längsrand des Kathodenstromkollektors aufsitzt und die zweite endständige Stirnseite abdeckt und mit diesem verbunden ist.
g. Das Energiespeicherelement umfasst ein luft- und flüssigkeitsdicht verschlossenes Gehäuse, das einen metallischen Gehäusebecher mit einer endständigen kreisförmigen Öffnung und einen Deckel mit einem kreisförmigen Rand, welcher die kreisförmige Öffnung verschließt, umfasst, und das einen Innenraum umschließt, in dem der Elektroden-Separator-Verbund angeordnet ist.
h. Das Gehäuse umfasst eine Dichtung aus einem Kunststoffmaterial, welche den Rand des Deckels umschließt und zwischen dem Deckel und dem Gehäusebecher angeordnet ist.

Besonders zeichnet sich das erfindungsgemäße Energiespeicherelement dadurch aus, dass
i. die Dichtung ein Stützelement umfasst, das auf dem Kontaktblechteil aufsitzt.

Durch das Stützelement ist gewährleistet, dass der Elektroden-Separator-Verbund gegen Bewegungen in axialer Richtung besser stabilisiert ist. In der Folge sind beispielsweise die eingangs genannten bodenseitigen Verschweißungen besser vor mechanischen Belastungen abgeschirmt. Beispielsweise kann ein zweites Kontaktblechteil auf dem zweiten Längsrand des Anodenstromkollektors oder des Kathodenstromkollektors aufsitzen mit dem Boden des Gehäusebechers verschweißt sein.

Vorteilhaft ist hierbei, dass die Stützfunktion ohne ein separates Bauteil realisiert werden kann, das Stützelement ist ja Teil der Dichtung.

Darüber hinaus kann das Stützelement auch einen funktionalen Schutz bei mechanischer Deformation der Zelle vor internen Kurzschlüssen darstellen. Die Dichtung kann beispielsweise einen Kurzschluss in Folge eines unmittelbaren Kontakts des Gehäusebechers mit einer elektrischen Verbindung zwischen dem Deckel und dem Kontaktblechteil verhindern. Solche Kontakte können beispielsweise bei Crush-Tests unter seitlicher Deformation von Zellen eine Rolle spielen.

Die elektrische Verbindung zwischen dem Deckel und dem Kontaktblechteil besteht bevorzugt über ein gefaltetes Metallblech, beispielsweise einen Metallblechstreifen, der Z-artig gefaltet vorliegt. Dieses kann beispielsweise mit dem Deckel und/oder dem Kontaktblechteil durch Verschweißung verbunden sein. Entsprechende elektrische Verbindungen können aber auch durch Verlötung oder Verklebung oder durch eine mechanische Verbindung, beispielsweise eine Nietverbindung, hergestellt werden.

Alternativ kann die elektrische Verbindung auch über einen Distanzausgleichsblechteil oder einen Distanzausgleichsbereich hergestellt werden, wie diese in der noch unveröffentlichten EP-Anmeldung 23190399.8 beschrieben sind, deren Priorität für die vorliegende Anmeldung beansprucht wird.

Besonders bevorzugt zeichnet sich das Energiespeicherelement durch mindestens eines der unmittelbar folgenden zusätzlichen Merkmale a. bis c. aus:
a. Die Dichtung umfasst ein ringförmiges Isoliersegment, dessen Innenseite an dem Deckel und dessen Außenseite an dem Rand des Deckels anliegt.
b. Das Stützelement ist als ringförmiges Stützsegment ausgebildet, das sich ausgehend von dem Isoliersegment bis zu dem Kontaktblechteil erstreckt.
c. Das Stützelement umfasst mehrere separate Fortsätze, die sich ausgehend von dem Isoliersegment bis zu dem Kontaktblechteil erstrecken.

Das ringförmige Isoliersegment dient zum einen zur Abdichtung des Gehäuses, zum anderen aber auch als elektrischer Isolator, der einen unmittelbaren Kontakt von Deckel und Gehäusebecher verhindern soll. Es kann den Rand des Deckels beispielsweise U-förmig verschließen.

Das Stützsegment kann sich kragenartig an das ringförmige Isoliersegment anschließen. Es sitzt bevorzugt auf einer ringförmigen Auflagefläche auf dem Kontaktblechteil auf bzw. presst in diesem Bereich auf das Kontaktblechteil.

Die genannte Ausführungsform als ringförmiges Stützsegment ist meist bevorzugt, in alternativen Ausführungsformen kann das Stützelement aber auch die genannten separaten Fortsätze aufweisen. Bei diesen kann es sich beispielsweise um Ringsegmente handeln
Es ist weiterhin bevorzugt, dass sich das Energiespeicherelement durch mindestens eines der unmittelbar folgenden zusätzlichen Merkmale a. und b. auszeichnet:
a. Der Gehäusebecher umfasst in axialer Abfolge einen Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung, insbesondere das ringförmige Isoliersegment, in einem Presskontakt mit dem Rand des Deckels und der Innenseite des Gehäusebechers steht, und
b. der Gehäusebecher weist in dem Verschlussabschnitt einen die kreisförmige Öffnung definierenden Öffnungsrand auf, der radial nach innen über den von der Dichtung umschlossenen Rand des Deckels umgebogen ist und der den Deckel einschließlich der Dichtung in der kreisförmigen Öffnung des Gehäusebechers formschlüssig fixiert.

Es ist bevorzugt, dass die unmittelbar vorstehenden Merkmale a. und b. in Kombination realisiert sind.

Das Kontaktblechteil, das auf dem erwähnten ersten Längsrand des Anodenstromkollektors oder dem ersten Längsrand des Kathodenstromkollektors aufsitzt, umfasst bevorzugt einen Kontaktierungsbereich, in dem es fest mit dem jeweiligen ersten Längsrand verbunden ist, beispielsweise durch Verschweißung. In einigen bevorzugten Ausführungsformen ist der Kontaktierungsbereich scheibenförmig ausgebildet und erstreckt sich bevorzugt im Wesentlichen in einer Ebene.

In einer besonders bevorzugten Ausführungsform der Erfindung zeichnet sich das Energiespeicherelement durch mindestens eines der unmittelbar folgenden Merkmale a. und b. aus:
a. Das Kontaktblechteil weist mindestens eine Sicke auf, die auf einer Flachseite des Kontaktblechteils als längliche Vertiefung und auf der gegenüberliegenden Flachseite als längliche Erhöhung zu Tage tritt, wobei das Kontaktblechteil mit der Flachseite, welche die längliche Erhöhung trägt, auf dem ersten Längsrand des Anodenstromkollektors oder auf dem ersten Längsrand des Kathodenstromkollektors aufsitzt.
g. Das Kontaktblechteil ist im Bereich der Sicke mit dem ersten Rand des Anodenstromkollektors verschweißt, insbesondere über eine oder mehrere in der Sicke angeordnete Schweißnähte.

Hier dient also die mindestens eine Sicke als Verschweißungsbereich. Es können beispielsweise drei Sicken in sternförmiger Anordnung vorgesehen sein. Eine Kontaktierung des jeweiligen Längsrands erfolgt bevorzugt über dessen gesamte Länge.

In einer Weiterbildung dieser Ausführungsform zeichnet sich Energiespeicherelement durch das unmittelbar folgende Merkmal a. aus:
a. Die ringförmige Dichtung, insbesondere das ringförmige Isoliersegment, ist teilweise in die längliche Vertiefung der mindestens einen Sicke gepresst.

Diese Ausführungsform gewährleistet über den bereits erwähnten Schutz vor axialen Bewegungen hinaus auch einen Schutz vor Querbewegungen des Wickels. Auch diese sind denkbar, da zwischen der Innenwand des Gehäusebechers und dem Elektroden-Separator-Verbund in einigen Ausführungsformen ein kleiner Spalt vorliegen kann.

Es ist weiterhin bevorzugt, dass sich das Energiespeicherelement durch mindestens eines der unmittelbar folgenden Merkmale a. bis c. auszeichnet:
a. Der Deckel umfasst eine Metallscheibe mit einem kreisförmigen Rand, wobei die Metallscheibe eine Innenseite aufweist, die den Innenraum begrenzt und wobei der Rand den Rand des Deckels bildet.
b. Der Rand wird von der ringförmigen Dichtung, insbesondere dem ringförmige Isoliersegment, umschlossen.
c. Die Dichtung, insbesondere das Stützelement, wird von der Metallscheibe, gegebenenfalls mittelbar über das den Rand umschließende ringförmige Isoliersegment, auf das Kontaktblechteil gepresst und steht entsprechend in einem Presskontakt mit dem Kontaktblechteil.

Je stärker der Presskontakt ist, desto wirksamer ist in aller Regel die Stabilisierung des Elektroden-Separator-Verbunds.

In bevorzugten Ausführungsformen zeichnet sich das erfindungsgemäße Energiespeicherelement durch mindestens eines der folgenden Merkmale aus:
a. Der Deckel ist eine Deckelbaugruppe, die neben der Metallscheibe eine Polkappe umfasst, die mit der Metallscheibe in elektrischem Kontakt steht.
b. Die Polkappe sitzt unmittelbar auf der Metallscheibe auf.
c. Die Polkappe und die Metallscheibe schließen einen Zwischenraum ein.
d. Die Metallscheibe umfasst einen Verbindungsbereich, in dem die Verbindung mit einem elektrischen Leiter, der die Metallscheibe elektrisch mit dem Kontaktblechteil realisiert ist.

Besonders bevorzugt sind die unmittelbar vorstehenden Merkmale a. bis d. in Kombination realisiert.

Bei dem elektrischen Leiter handelt es sich beispielsweise um das oben erwähnte gefaltete Metallblech.

Der Boden des Gehäusebechers ist bevorzugt kreisförmig ausgebildet. Der Gehäusebecher wird meist durch Tiefziehen gebildet. Es ist aber auch möglich, den Becher durch Einschweißen eines Bodens in ein rohrförmiges Halbteil zu bilden.

Bevorzugt ist das erfindungsgemäße Energiespeicherelement als zylindrische Rundzelle ausgebildet. Seine Höhe liegt bevorzugt im Bereich von 50 mm bis 150 mm. Sein Durchmesser liegt bevorzugt im Bereich von 15 mm bis 60 mm. Zylindrische Rundzellen mit diesen Formfaktoren eignen sich beispielsweise zur Stromversorgung elektrischer Antriebe von Kraftfahrzeugen.

### Ausführungsform als Lithium-Ionen-Energiespeicherelement

In einer besonders bevorzugten Ausführungsform der Erfindung basiert das erfindungsgemäße Energiespeicherelement auf Lithium-lonen-Technologie.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoOz und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Das Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität eines als zylindrische Rundzelle ausgebildeten Energiespeicherelements auf Lithium-Ionen-Basis beträgt bevorzugt bis zu 15000 mAh. Mit dem Formfaktor von 21 × 70 hat die Rundzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Rundzelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Ausführungsform auf Natrium-Ionen-Basis

In weiteren Ausführungsformen kann es sich bei dem Energiespeicherelement auch um eine Natrium-Ionen-Zelle, eine Kalium-Ionen-Zelle, eine Calzium-Ionen-Zelle, eine Magnesium-Ionen-Zelle oder eine Aluminium-Ionen-Zelle handeln. Unter diesen Varianten sind Energiespeicherelemente mit Natrium-Ionen-Zellchemie besonders bevorzugt.

Bevorzugt umfasst das Energiespeicherelement auf Basis von Natrium-Ionen einen Elektrolyten, der mindestens eines der folgenden Lösungsmittel und mindestens eines der folgenden Leitsalze umfasst:
Als Lösungsmittel kommen insbesondere organische Carbonate, Ether, Nitrile und Mischungen daraus in Frage. Bevorzugte Beispiele sind:
- Carbonate: Propylencarbonat (PC), Ethylencarbonat-Propylencarbonat (EC-PC), Propylencarbonat-Dimethylcarbonat-Ethylmethylcarbonat (PC-DMC-EMC), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC), Ethylencarbonat-Dimethylcarbonat-Diethylcarbonat (EC-DMC-DEC)
- Ether: Tetrahydrofuran (THE), 2-Methyltetrahydrofuran, Dimethylether (OME), 1,4-dioxane (DX), 1,3-dioxolane (DOL), Diethylenglykoldimethylether (DEGDME), Tetraethylenglykoldimethylether (TEGDME)
- Nitrile: Acetonitril (ACN), Adiponitril (AON), y-Butyrolactone (GBL)

Weiterhin kommen auch Trimethylphosphat (TMP) und Tris(2,2,2-trifluoroethyl)phosphat (TFP) in Frage.

### Bevorzugte Leitsalze sind:

NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Dem Elektrolyten können in bevorzugten Ausführungsformen Additive zugesetzt sein. Beispiele bevorzugter Additive, insbesondere zur Stabilisierung, sind die folgenden:
Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl3), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

Bei dem negativen Elektrodenmaterial eines Energiespeicherelements auf Basis von Natrium-Ionen handelt es sich bevorzugt um mindestens eines der folgenden Materialien:
- Kohlenstoff, besonders präferiert Hardcarbon (rein oder mit Stickstoff- und/oder Phosphor-Dotierung) oder Softcarbon oder Graphene-basierte Materialien (mit N-dotierung); Kohlenstoffnanotubes, Graphit
- Phosphor oder Schwefel (Konversionsanode)
- Polyanionen: Na₂Ti₃O₇, Na₃Ti₂(PO₄)₃, TiP₂O₇, TiNb₂O₇, Na-Ti-(PO₄)₃, Na-V-(PO₄)₃
- Preussisch Blau: Na-arme Variante (für Systeme mit wässrigem Elektrolyt)
- Übergangsmetalloxide: V₂O₅, MnO₂, TiO₂, NbzOs, Fe₂O₃, Na₂Ti₃O₇, NaCrTiO₄, Na₄Ti₅O₁₂
- MXene mit M= Ti, V, Cr, Mo oder Nb und A = Al, Si, und Ga sowie X= C und/oder N, z.B. Ti₃C₂
- Organisch: z.B. Na-Terephthalate (Na₂C₈H₂O₄)

Alternativ kann anodenseitig grundsätzlich auch eine Na-Metallanode zum Einsatz kommen.

Bei dem positiven Elektrodenmaterial eines Energiespeicherelements auf Basis von Natrium-Ionen handelt es sich beispielsweise um mindestens eines der folgenden Materialien:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, Na-CoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(Ni-FeCo)₃O₂, Na(NiFeMn)O₂, and Na(NiFeCoMn)O₂, Na(NiMnCo)O₂

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei die Aktivmaterialien bevorzugt partikulär eingesetzt werden und benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Na-)Polyacrylat, Styrol-Butadien-Kautschuk, (Na)-Alginat oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Besonders bevorzugt bestehen bei einem Energiespeicherelement auf Basis von Natrium-lonen-Technologie sowohl der Anoden- als auch der Kathodenstromkollektor aus Aluminium oder einer Aluminiumlegierung. Auch das Gehäuse und die Kontaktplatten sowie ggf. vorhandene weitere Stromleiter innerhalb des Gehäuses können aus Aluminium oder aus der Aluminiumlegierung bestehen.

### Bevorzugte Ausgestaltung des Gehäuses

Besonders bevorzugt zeichnet sich das erfindungsgemäße Energiespeicherelement durch mindestens eines der folgenden Merkmale a. bis c. aus:
a. Der Zentralabschnitt und der Verschlussabschnitt werden durch eine Einbuchtung, welche die Außenseite des Gehäusebechers ringförmig umläuft, getrennt.
b. Der Gehäusebecher weist in dem Zentralabschnitt und dem Verschlussabschnitt einen identischen maximalen Außendurchmesser auf.
c. Im Bereich der Einbuchtung ist der Außendurchmesser des Gehäusebechers um das 4-bis 20-fache der Wandstärke des Gehäusebechers in diesem Bereich reduziert.

Es ist bevorzugt, dass zumindest die unmittelbar vorstehenden Merkmale a. und b. in Kombination realisiert sind. Besonders bevorzugt sind alle drei unmittelbar vorstehenden Merkmale a. bis c. in Kombination realisiert.

Bevorzugt liegt das ringförmige Isoliersegment der Dichtung in dem Verschlussabschnitt komprimiert vor. Es wird bevorzugt radial gegen den kreisförmigen Rand des Deckels gepresst.

### Bevorzugte Ausführungsformen des Kontaktblechteils

Grundsätzlich kann das Kontaktblechteil mit dem Anodenstromkollektor oder dem Kathodenstromkollektor elektrisch verbunden sein.

In einer besonders bevorzugten Ausführungsform der Erfindung zeichnet sich ein mit dem Anodenstromkollektor elektrisch verbundenes Kontaktblechteil durch mindestens eines der folgenden Merkmale a. und b. aus:
a. Das Kontaktblechteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblechteil besteht aus dem gleichen Material wie der Anodenstromkollektor.

In einer weiteren besonders bevorzugten Ausführungsform der Erfindung zeichnet sich ein mit dem Kathodenstromkollektor elektrisch verbundenes Kontaktblechteil durch mindestens eines der folgenden Merkmale a. und b. aus:
a. Das Kontaktblechteil besteht aus Aluminium oder einer Aluminiumlegierung.
b. Das Kontaktblechteil besteht aus dem gleichen Material wie der Anodenstromkollektor.

Besonders bevorzugt zeichnen sich das mit dem Anodenstromkollektor verbundene Kontaktblechteil und/oder das mit dem Kathodenstromkollektor elektrisch verbundene Kontaktblechteil durch mindestens eines der unmittelbar folgenden Merkmale a. und b. aus:
a. Das Kontaktblechteil weist eine bevorzugt gleichmäßige Dicke im Bereich von 50 µm bis 600 µm, bevorzugt im Bereich von 150 µm bis 350 µm, auf.
b. Das Kontaktblechteil ist derart dimensioniert, dass es mindestens 40 %, bevorzugt mindestens 70 %, besonders bevorzugt mindestens 80 % der ersten endständigen oder der zweiten endständigen Stirnseite abdeckt.

Es ist besonders bevorzugt, dass die unmittelbar vorstehenden Merkmale a. und b. in Kombination miteinander realisiert sind.

Das Distanzausgleichsblechteil ist besteht bevorzugt aus einem Blech mit einer Dicke im Bereich von 50 µm bis 1 mm.

Die möglichst großflächige Abdeckung der Stirnseite ist für das thermische Management des erfindungsgemäßen Energiespeicherelements von Bedeutung. Je größer die Abdeckung ist, desto eher ist es möglich, möglichst lange Abschnitte des ersten Längsrands des jeweiligen Stromkollektors zu kontaktieren. In Elektroden-Separator-Verbund gebildete Wärme kann so gut über das Kontaktblechteil abgeführt werden.

Es hat sich in einigen Ausführungsformen als vorteilhaft erwiesen, den Längsrand des Stromkollektors einer Vorbehandlung zu unterziehen, bevor das Kontaktblechteil aufgesetzt wird.

Der Längsrand des Stromkollektors kann auch durch eine Vorbehandlung einer gerichteten Umformung unterzogen worden sein. Beispielsweise kann er in eine definierte Richtung umgebogen sein. Weiterhin kann der Längsrand des Stromkollektors auch ungerichtet deformiert sein, beispielsweise in Folge eines Druckkontakts mit dem Kontaktblechteil.

### Bevorzugte Ausgestaltung von Stromkollektoren und Separatoren

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden und der oder die bandförmigen Separatoren in der Regel einer Wickelvorrichtung zugeführt und in dieser bevorzugt um eine Wickelachse herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der Separator oder die Separatoren auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Die Stromkollektoren des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

### Mögliche Ausgestaltungen der Dichtung

Es ist bevorzugt, dass sich das erfindungsgemäße Energiespeicherelement durch mindestens eines der unmittelbar folgenden Merkmale a. und b. auszeichnet:
a. Die Dichtung besteht aus einem Kunststoffmaterial, das einen Schmelzpunkt > 200 °C, bevorzugt > 300 °C, besonders bevorzugt einen Schmelzpunkt > 300 °C und < 350 °C, aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE) oder ein Polybutylenterephthalat (PBT).

Es ist bevorzugt, dass die unmittelbar vorstehenden Merkmale a. und b. in Kombination realisiert sind.

### Erfindungsgemäßes Verfahren.

Das erfindungsgemäße Verfahren kann zur Herstellung eines Energiespeicherelements, wie es oben beschrieben wurde, dienen, und zeichnet sich durch die folgenden Schritte aus:
a. Bereitstellung eines metallischen Gehäusebechers mit einer endständigen kreisförmigen Öffnung.
b. Bereitstellen eines Elektroden-Separator-Verbunds mit der Sequenz Anode / Separator / Kathode, der eine erste endständige Stirnseite und eine zweite endständige Stirnseite aufweist.
c. Aufbringen eines Kontaktblechteils auf mindestens eine der Stirnseiten.
d. Einbringen des Elektroden-Separator-Verbunds in den Gehäusebecher.
e. Schließen der kreisförmigen Öffnung des Gehäusebechers mittels eines Deckels, auf dessen Rand von einer kreisförmigen Dichtung aus einem Kunststoffmaterial umschlossen ist
f. Gezielte Deformation des Gehäusebechers, so dass die Dichtung, insbesondere ein von der Dichtung umfasstes Stützelement, auf das Kontaktblechteil gepresst wird.

Bezüglich bevorzugter Ausführungsformen des Gehäusebechers, des Elektroden-Separator-Verbunds, des Kontaktblechteils, des Deckels und der Dichtung wird auf die obigen Ausführungen verwiesen.

Zum Schließen der kreisförmigen Öffnung des Gehäusebechers mittels des Deckels kann auf herkömmliche Verschlussverfahren zurückgegriffen werden. Besonders bevorzugt ist der Verschluss durch Bördelung. Im Rahmen dieses Prozesses wird der Rand des Gehäusebechers radial nach innen umgebogen, gleichzeitig wird die Dichtung auf die oben beschriebene Art komprimiert.

Vor oder nach dem Gehäuseverschluss kann der Elektroden-Separator-Verbund mit einem geeigneten Elektrolyten getränkt werden. In der zweiten Variante muss der Elektrolyt über ein geeignetes Loch im Gehäuse eindosiert werden, welches anschließend verschlossen wird.

Das Herstellen einer elektrischen Verbindung zwischen dem Deckel und dem Kontaktblechteil und zwischen dem Kontaktblechteil und dem Längsrand, auf dem es aufsitzt, kann beispielsweise auf üblich Art mittels Verschweißung erfolgen.

Besonders bevorzugt werden Kontaktblechteile auf beide Seiten des Elektroden-Separator-Verbunds aufgebracht. Der Elektroden-Separator-Verbund wird dann mit einer der Stirnseiten voran so weit in den Gehäusebecher eingeschoben, bis das darauf aufsitzende Kontaktblechteil auf dem Becherboden aufsitzt. Es kann beispielsweise mittels Widerstandsschweißen mit dem Becherboden verschweißt werden.

In einer bevorzugten Ausführungsform zeichnet sich das Verfahren durch eines der folgenden Merkmale a. oder b. aus:
a. Bei der gezielten Deformation handelt es sich um einen Bördelschritt, bei dem der Rand des Gehäusebechers radial nach innen umgebogen und auf die Dichtung gedrückt wird.
b. Bei der gezielten Deformation handelt es sich um eine Höhenkalibrierung, bei der der Gehäusebecher im Verschlussbereich axial gestaucht und der Deckel in Richtung des Bodens gedrückt wird.

Entscheidend ist, dass der Deckel mitsamt der Dichtung bei der gezielten Deformation in Richtung des Kontaktblechteils gedrückt wird, so dass das Stützelement gegen das Kontaktblechteil pressen kann. Bei der Deformation müssen also axiale Kräfte auf den Deckel wirken.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 einen Ausschnitt einer Querschnittsansicht einer bevorzugten Ausführungsform eines erfindungsgemäßen Energiespeicherelements mit einer Dichtung, die ein Stützelement umfasst;
- Fig. 2 eine bevorzugte Ausführungsform eines Kontaktblechteils für ein erfindungsgemäßes Energiespeicherelement (Aufsicht senkrecht von oben);
- Fig. 3 einen Elektroden-Separator-Verbund, der Bestandteil eines erfindungsgemäßen Energiespeicherelements sein kann, sowie dessen Komponenten;
- Fig. 4 eine Ansicht (Querschnittsdarstellung) des Bodenbereichs eines erfindungsgemä-βen Energiespeicherelements.

### DETAILLIERTE BESCHREIBUNG DER AUSFÜHRUNGSBEISPIELE

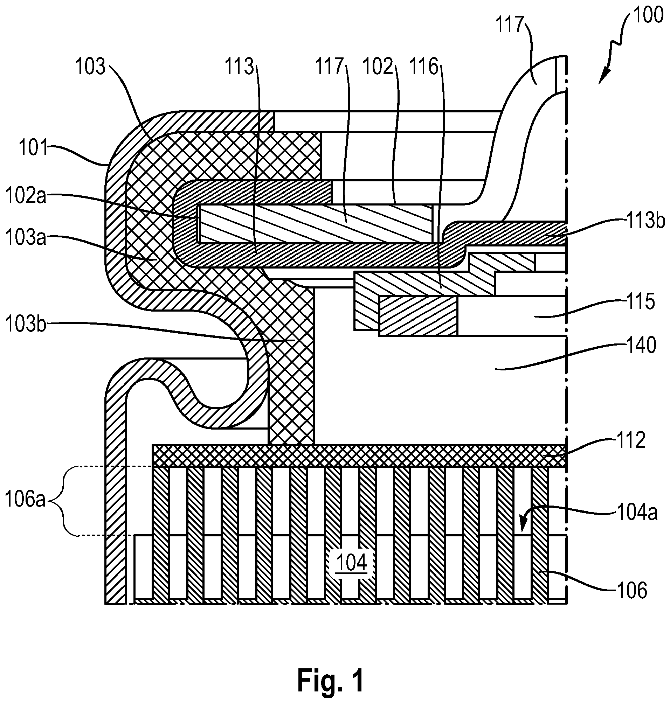

Das in **Fig.** 1 dargestellte Energiespeicherelement 100 umfasst den Elektroden-Separator-Verbund 104, der in Form eines zylindrischen Wickels mit zwei endständigen Stirnseiten und einem dazwischen liegenden Wickelmantel vorliegt. Aus der endständigen Stirnseite 104a tritt der erste Längsrand 106a des Anodenstromkollektors 106 aus. Dieser ist nicht mit Elektrodenmaterial beladen und durch Verschweißung mit dem Kontaktblechteil 112 verbunden, das auf dem Längsrand 106a aufsitzt und die erste endständige Stirnseite 104a abdeckt. Bei Bedarf kann der Randbereich des Kontaktblechteils durch einen zusätzlichen Isolator vor einem unmittelbaren Kontakt mit der Innenwand des Gehäusebechers 101 geschützt werden.

Weiterhin umfasst das Energiespeicherelement 100 ein luft- und flüssigkeitsdicht verschlossenes Gehäuse, das den metallischen Gehäusebecher 101 mit einer endständigen kreisförmigen Öffnung und die Deckelbaugruppe 102 mit einem kreisförmigen Rand 102a, welcher die kreisförmige Öffnung verschließt, umfasst. Die Deckelbaugruppe 102 umfasst die Metallscheibe 113, deren Unterseite 113b den Innenraum 140 des Gehäuses begrenzt, sowie die Polkappe 117, die unmittelbar auf der Metallscheibe 113 aufsitzt und mit dieser in elektrischem Kontakt steht.

Das Kontaktblechteil 112 ist über einen Z-förmig gebogenen Leiter (nicht dargestellt) mit einer Metallscheibe 115 verbunden. Diese ist an das Zentrum der Metallscheibe 113 geschweißt, die als PRV (pressure relief valve) ausgebildet ist. Um dieses Zentrum herum sind die Metallscheibe 113 und die Metallscheibe 115 durch den ringförmigen Kunststoffisolator 116 voneinander getrennt.

Das Gehäuse umfasst weiterhin die Kunststoffdichtung 103, welche den Rand 102a der Deckelbaugruppe 102 umschließt und die metallischen Komponenten der Deckelbaugruppe 102 von dem Gehäusebecher 101 elektrisch isoliert. Gleichzeitig trägt sie dazu bei, das Gehäuse abzudichten, und verleiht der Zelle axiale Stabilität. Hierzu umfasst die Dichtung 103 das ringförmige Isoliersegment 103a, dessen Innenseite an dem Deckel 102 und dessen Außenseite an dem Rand 102a des Deckels 102 anliegt. Weiterhin umfasst die Dichtung 103 das ringförmige Stützsegment 103b, das sich ausgehend von dem Isoliersegment 103a bis zu dem Kontaktblechteil 112 erstreckt und bevorzugt auf einem ringförmigen Auflagebereich auf dem Kontaktblechteil 112 aufsitzt bzw. presst in diesem Bereich gegen das Kontaktblechteil 112 presst.

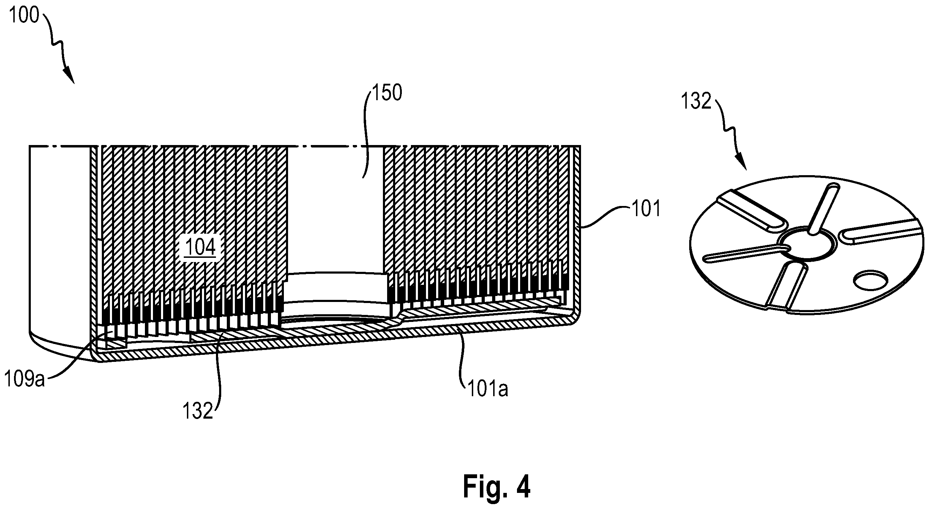

Durch das Stützelement 103b ist gewährleistet, dass der Elektroden-Separator-Verbund 104 gegen Bewegungen in axialer Richtung besser stabilisiert ist. In der Folge sind bodenseitige Verschweißungen der Zelle (siehe Fig. 4) besser vor mechanischen Belastungen abgeschirmt.

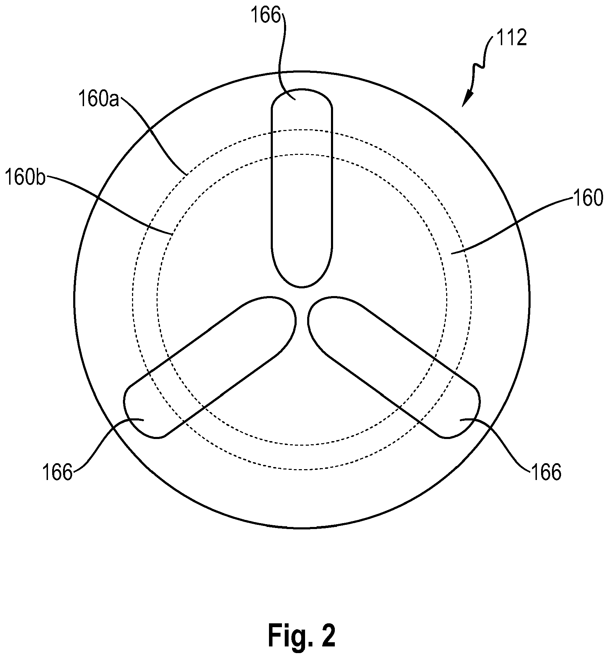

Das in **Fig.** 2 dargestellte Kontaktblechteil 112 ist scheibenförmig ausgebildet und weist drei sternförmig angeordnete Sicken 166 auf. In diesen Sicken 166 erfolgt bevorzugt die Verschwei-βung mit dem Längsrand, auf dem das Kontaktblechteil aufsitzt. Dargestellt ist des Weiteren die Auflagebereich 160, in dem das in Fig. 1 dargestellte ringförmige Stützsegment 103b aufsitzt. Das ringförmige Isoliersegment 103a kann bei ausreichendem Pressdruck in die Sicken 166 gepresst werden. Hierdurch kann der Elektroden-Separator-Verbund auch gegen Bewegungen senkrecht zur Zellachse stabilisiert werden.

Der Auflagebereich kann in einigen bevorzugten Ausführungsform als ringförmige Vertiefung ausgebildet sein oder durch einen oder zwei ringförmige Erhöhungen entlang einem der Ränder 160a und 160b (oder entlang beiden Rändern) begrenzt werden. Die Vertiefung oder die mindestens eine Erhöhung kann als Positionierungshilfe bei der Zellmontage dienen und ebenfalls zur Stabilisierung dienen.

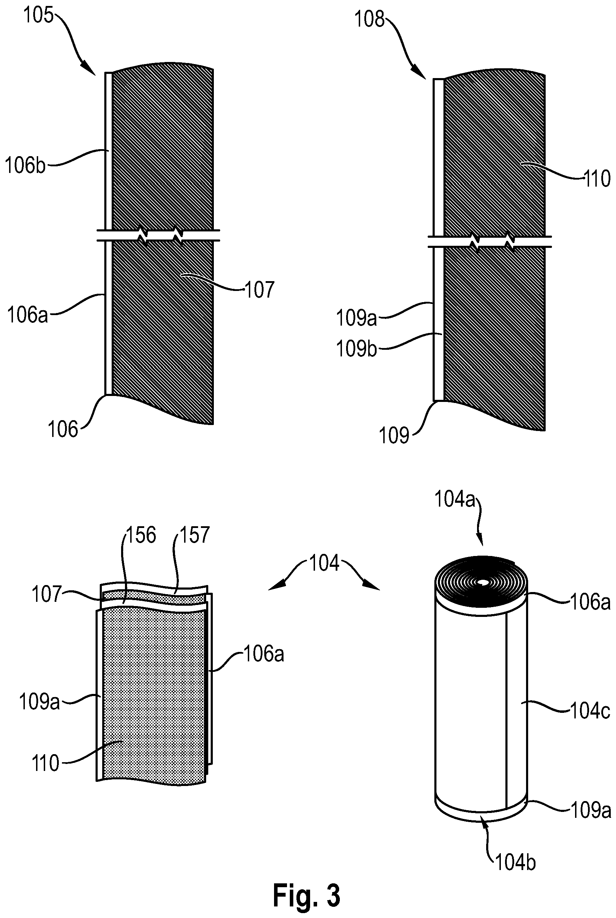

**Fig.** 3 veranschaulicht den Aufbau eines Elektroden-Separator-Verbunds 104, der Bestandteil eines erfindungsgemäßen Energiespeicherelements sein kann. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

In **Fig.** 4 ist der Bodenbereich einer bevorzugten Ausführungsform eines erfindungsgemäßen Energiespeicherelements 100 dargestellt. In dem Gehäusebecher 101 ist der Elektroden-Separator-Verbund 104 angeordnet. Auf dem Boden 101a des Gehäusebechers sitzt das Kontaktblechteil 132 auf. Dessen Unterseite ist vorzugsweise durch Verschweißung mit dem Boden 101a verbunden. Die Verschweißung kann durch den Boden 101a hindurch mittels eines Lasers bewirkt werden. Alternativ kann beispielsweise auch mindestens eine Schweißelektrode durch den axialen Hohlraum 150 im Zentrum des Elektroden-Separator-Verbund 104 geführt werden. Eine Gegenelektrode kann auch an die Außenseite des Bodens 101a angepresst werden. Die Oberseite des Kontaktblechteils 132 steht in unmittelbarem Kontakt mit dem Längsrand 109a eines Anodenstromkollektors. Bevorzugt sind der Längsrand 109a und das Kontaktblechteil 132 ebenfalls durch Verschweißung verbunden.

Das Kontaktblechteil 132 ist separat dargestellt. Es weist wie das Kontaktblechteil 112 Sicken auf, um die Kontaktierung zu dem Längsrand 109a zu verbessern. Die schlitzförmigen Durchbrechungen dienen zur Entgasung sowie zur besseren Verteilung von Elektrolyt.

## Patentansprüche

1. Energiespeicherelement (100) mit den folgenden Merkmalen:
a. Das Energiespeicherelement umfasst einen Elektroden-Separator-Verbund (104) mit der Sequenz Anode (105) / Separator (156) / Kathode (108),
b. der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor,
c. die Anode (105) des Elektroden-Separator-Verbunds (104) umfasst einen Anodenstromkollektor (106), der einen ersten Längsrand (106a) und einen dazu parallelen zweiten Längsrand aufweist und einen Hauptbereich, der mit einer Schicht (107) aus negativem Elektrodenmaterial beladen ist, sowie einen freien Randstreifen, der sich entlang seines ersten Längsrands (106a) erstreckt und der nicht mit dem negativen Elektrodenmaterial beladen ist,
d. die Kathode (108) des Elektroden-Separator-Verbunds (104) umfasst einen Kathodenstromkollektor (109), der einen ersten Längsrand (109a) und einen dazu parallelen zweiten Längsrand aufweist und einen Hauptbereich, der mit einer Schicht aus positivem Elektrodenmaterial (110) beladen ist, sowie einen freien Randstreifen, der sich entlang seines ersten Längsrands (109a) erstreckt und der nicht mit dem Elektrodenmaterial (110) beladen ist,
e. die Anode (105) und die Kathode (108) sind innerhalb des Elektroden-Separator-Verbunds (104) derart angeordnet, dass der erste Längsrand (106a) des Anodenstromkollektors (106) aus der ersten endständigen Stirnseite (104a) und der erste Längsrand (109a) des Kathodenstromkollektors (108) aus der zweiten endständigen Stirnseite (104b) des Elektroden-Separator-Verbunds (104) austritt,
f. das Energiespeicherelement umfasst ein Kontaktblechteil (112), das auf dem ersten Längsrand (106a) des Anodenstromkollektors (106) aufsitzt und die erste endständige Stirnseite (104a) abdeckt oder auf dem ersten Längsrand (109a) des Kathodenstromkollektors (109) aufsitzt und die zweite endständige Stirnseite (104b) abdeckt und mit diesem verbunden ist,
g. das Energiespeicherelement umfasst ein luft- und flüssigkeitsdicht verschlossenes Gehäuse, das einen metallischen Gehäusebecher (101) mit einer endständigen kreisförmigen Öffnung und einen Deckel (102) mit einem kreisförmigen Rand (102a), welcher die kreisförmige Öffnung verschließt, umfasst, und das einen Innenraum umschließt, in dem der Elektroden-Separator-Verbund (104) angeordnet ist,
h. das Gehäuse umfasst eine Dichtung (103) aus einem Kunststoffmaterial, welche den Rand (102a) des Deckels (102) umschließt und zwischen dem Deckel (102) und dem Gehäusebecher (101) angeordnet ist.
**dadurch gekennzeichnet, dass**
i. die Dichtung (103) ein Stützelement (103b) umfasst, das auf dem Kontaktblechteil (112) aufsitzt.

2. Energiespeicherelement (100) nach Anspruch 1 mit mindestens einem der folgenden zusätzlichen Merkmale:
a. Die Dichtung (103) umfasst ein ringförmiges Isoliersegment (103a), dessen Innenseite an dem Deckel (102) und dessen Außenseite an dem Rand (102a) des Deckels (102) anliegt.
b. Das Stützelement (103b) ist als ringförmiges Stützsegment ausgebildet, das sich ausgehend von dem Isoliersegment (103a) bis zu dem Kontaktblechteil (112) erstreckt.
c. Das Stützelement (103b) umfasst mehrere separate Fortsätze, die sich ausgehend von dem Isoliersegment (103a) bis zu dem Kontaktblechteil (112) erstrecken.

3. Energiespeicherelement (100) nach Anspruch 1 oder Anspruch 2 mit mindestens einem der folgenden zusätzlichen Merkmale:
a. Der Gehäusebecher (101) umfasst in axialer Abfolge einen Boden (101a), einen Zentralabschnitt (101b) und einen Verschlussabschnitt (101c), wobei
- der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite des Gehäusebechers (101) in Kontakt steht, und
- in dem Verschlussabschnitt (101c) die ringförmige Dichtung (103), insbesondere das ringförmige Isoliersegment (103a), in einem Presskontakt mit dem Rand des Deckels (102) und der Innenseite des Gehäusebechers (101) steht, und
b. der Gehäusebecher (101) weist in dem Verschlussabschnitt (101c) einen die kreisförmige Öffnung definierenden Öffnungsrand (101d) auf, der radial nach innen über den von der Dichtung (103) umschlossenen Rand des Deckels (102) umgebogen ist und der den Deckel (102) einschließlich der Dichtung (103) in der kreisförmigen Öffnung des Gehäusebechers (101) formschlüssig fixiert.

4. Energiespeicherelement (100) nach mindestens einem der vorhergehenden Ansprüche mit mindestens einem der folgenden zusätzlichen Merkmale:
a. Das Kontaktblechteil (112) weist mindestens eine Sicke (166) auf, die auf einer Flachseite des Kontaktblechteils (112) als längliche Vertiefung und auf der gegenüberliegenden Flachseite als längliche Erhöhung zu Tage tritt, wobei das Kontaktblechteil (112) mit der Flachseite, welche die längliche Erhöhung trägt, auf dem ersten Längsrand (106a) des Anodenstromkollektors (106) oder auf dem ersten Längsrand (109a) des Kathodenstromkollektors (109) aufsitzt.
b. Das Kontaktblechteil (112) ist im Bereich der Sicke (166) mit dem ersten Rand des Anodenstromkollektors verschweißt, insbesondere über eine oder mehrere in der Sicke angeordnete Schweißnähte.

5. Energiespeicherelement (100) nach Anspruch 4 mit dem folgenden zusätzlichen Merkmal:
a. Die ringförmige Dichtung (103), insbesondere das ringförmige Stützsegment (10ba), ist teilweise in die längliche Vertiefung der mindestens einen Sicke (166) gepresst.

6. Energiespeicherelement (100) nach mindestens einem der vorhergehenden Ansprüche mit mindestens einem der folgenden zusätzlichen Merkmale:
a. Der Deckel (102) umfasst eine Metallscheibe (113) mit einem kreisförmigen Rand (113c), wobei die Metallscheibe (113) eine Innenseite aufweist, die den Innenraum begrenzt und wobei der Rand (113c) den Rand (102a) des Deckels (102) bildet.
b. Der Rand (113c) wird von der ringförmigen Dichtung (103), insbesondere dem ringförmige Isoliersegment (103a), umschlossen.
c. Die Dichtung (103), insbesondere das Stützelement (103b), wird von der Metallscheibe (113), gegebenenfalls mittelbar über das den Rand (113c) umschließende ringförmige Isoliersegment (103a), auf das Kontaktblechteil (112) gepresst und steht entsprechend in einem Presskontakt mit dem Kontaktblechteil (112).

7. Verfahren zur Herstellung eines Energiespeicherelements (100) gemäß einem der Ansprüche 1 bis 6 mit den folgenden Schritten:
a. Bereitstellung eines metallischen Gehäusebechers (101) mit einer endständigen kreisförmigen Öffnung.
b. Bereitstellen eines Elektroden-Separator-Verbunds (104) mit der Sequenz Anode (105) / Separator (156) / Kathode (108), der eine erste endständige Stirnseite (104a) und eine zweite endständige Stirnseite (104b) aufweist.
c. Aufbringen eines Kontaktblechteils (112) auf mindestens eine der Stirnseiten.
d. Einbringen des Elektroden-Separator-Verbunds (104) in den Gehäusebecher (101).
e. Schließen der kreisförmigen Öffnung des Gehäusebechers (101) mittels eines Deckels (102), auf dessen Rand (102a) von einer kreisförmigen Dichtung (103) aus einem Kunststoffmaterial umschlossen ist
f. Gezielte Deformation des Gehäusebechers, so dass die Dichtung (103), insbesondere ein von der Dichtung umfasstes Stützelement (103b), auf das Kontaktblechteil (112) gepresst wird.

8. Verfahren nach Anspruch 7 mit einem der folgenden Schritte:
a. Bei der gezielten Deformation handelt es sich um einen Bördelschritt, bei dem der Rand (101a) des Gehäusebechers (101) radial nach innen umgebogen und auf die Dichtung (103) gedrückt wird.
b. Bei der gezielten Deformation handelt es sich um eine Höhenkalibrierung, bei der der Gehäusebecher (101) im Verschlussbereich axial gestaucht und der Deckel in Richtung des Bodens gedrückt wird.
